# EUROPEAN PATENT APPLICATION

(11) **EP 1 488 981 A1**
(43) Date of publication of application: **22.12.2004**
(21) Application number: 04012517.1
(22) Date of filing: 27.05.2004
(51) Int. Cl.: B62B 7/08

(54) **Wheeled foldable frame, particularly for pushchairs, prams, wheelchairs and the like**

(30) Priority: 17.06.2003 IT mi20031216; 30.09.2003 IT mi20031864
(71) Applicant: Colombo, Graziano, 21052 Busto Arsizio (Varese) (IT)
(72) Inventor: Colombo, Graziano, 21052 Busto Arsizio (Varese) (IT)
(74) Representative: Ghioni, Carlo Raoul Maria

(57) **Abstract**

A wheeled folding frame, particularly for pushchairs, prams, wheelchairs and the like comprises two rear supporting uprights (2a) each adapted to terminally engage a rear wheel (3a), two front supporting uprights (2b) adapted to terminally engage a front wheel (3b), two side support elements (4) for a seat rigidly connected with said rear uprights (2a), and two operating handles (5) connected each to one of said side support elements (4). The frame further comprises articulated connecting means (6) interposed between the uprights (2a, 2b) and adapted to guide displacement of same between a position at which the uprights (2a, 2b) are spaced apart from each other and a position at which all uprights (2a, 2b) are disposed substantially close to each other, and two articulated joints (7) that are each located between one of said front uprights (2b) and the respective side support element (4).

## Description

The present invention relates to a wheeled folding frame, particularly for pushchairs, prams, wheelchairs and the like.

It is known that pushchairs and prams for children, wheelchairs and similar items are often provided with a folding frame for the purpose of reducing bulkiness of said items and facilitating transportation or stowing of same.

The folding frame comprises supporting uprights adapted to terminally engage three or more wheels. The uprights are connected with the side support elements of a seat that is usually made of cloth or leather, so that it can be suitably folded up as well.

Extending from the rear part of the frame are operating handles that at their lower portion usually define the side supports of a back that is also made of cloth or leather.

Generally, the folding capability of the above mentioned frames consists in the possibility of moving the side portions thereof in side by side relationship with each other so as to reduce the transverse bulkiness of the pushchair or wheelchair of which they form the bearing structure.

The folding frames of known type further comprise at least one stabilising crosslike structure, i.e. a structure formed of a pair of rods articulated on each other at the middle and interposed between corresponding opposite uprights, to guide spacing apart or moving close of the side portions of the frames in a transverse direction and make them steady when they are widened out to an operating position.

While the known art briefly described above enables pushchairs, prams, wheelchairs and the like to be transversely flattened for transport or stowing, it however does not enable bulkiness of these hand-driven vehicles to be reduce in a longitudinal direction, so that even if folded they are not very handy.

In addition, sometimes the stabilising crosslike structure with which the folding frames of known type are provided is not adapted to ensure a sufficient stiffness to the frames themselves, above all for moving on uneven road surfaces and therefore cannot enable a behaviour during running that is similar to that offered by frames that are not of the folding type.

Under this situation, the technical task underlying the present invention is to devise a wheeled folding frame capable of reducing bulkiness of pushchairs, prams and wheelchairs for which this frame can be used, not only in a transverse direction but also in a longitudinal direction.

Another important aim is to devise a folding frame that in an operating condition has a great steadiness and therefore allows a safe running on uneven surfaces as well.

The technical task mentioned and the aims specified are substantially achieved by a wheeled folding frame that is characterised in that it comprises one or more of the technical solutions hereinafter claimed.

The description of a preferred but not exclusive embodiment of a folding frame in accordance with the invention is now set out hereinafter by way of nonlimiting example, with the aid of the accompanying drawings, in which:
- Fig. 1 is a perspective view of the folding frame in accordance with the invention in an open configuration;
- Fig. 2 is a perspective view of the frame in Fig. 1 in a closed configuration of minimum bulkiness;
- Fig. 3 shows the frame in Fig. 2 in a front view;
- Fig. 4 is a top view of the frame shown in Fig. 2;
- Fig. 5 shows the frame seen in Fig. 2 in a side view;
- Fig. 6 shows a first set of elements of the frame seen in Fig. 1;
- Fig. 7 is an exploded view of a second set of elements of the frame in Fig. 1; and
- Fig. 8 is an exploded view of a third set of elements of the frame in Fig. 1;
- Fig. 9 is an alternative embodiment of the frame in Fig. 1;

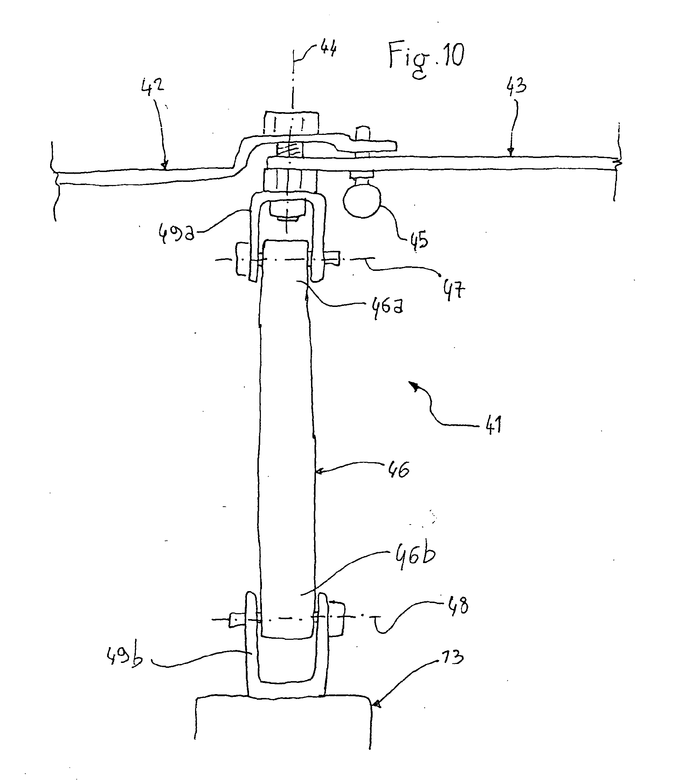

- Fig. 10 is a front view of a detail to an enlarged scale of the frame in Fig. 9; and
- Fig. 11 is a top view of the detail shown in Fig. 10.

With reference to the drawings, the folding frame in accordance with the invention has been generally identified by reference numeral 1.

Frame 1 comprises supporting uprights 2 adapted to terminally engage at least three wheels 3.

The supporting uprights 2 are connected with side support elements 4, preferably two in number, adapted to bear the opposite edges of a seat, not shown in the accompanying drawings, of a flexible type, made of cloth or leather, or consisting of several parts, so that it can be of the folding type as well.

Operating handles 5, preferably two in number, are connected either to the side support elements 4 or, in accordance with an alternative embodiment not shown, to the supporting uprights 2; said handles at the lower part thereof can advantageously constitute the side supports of a back, not shown in the accompanying figures, also adapted to be folded.

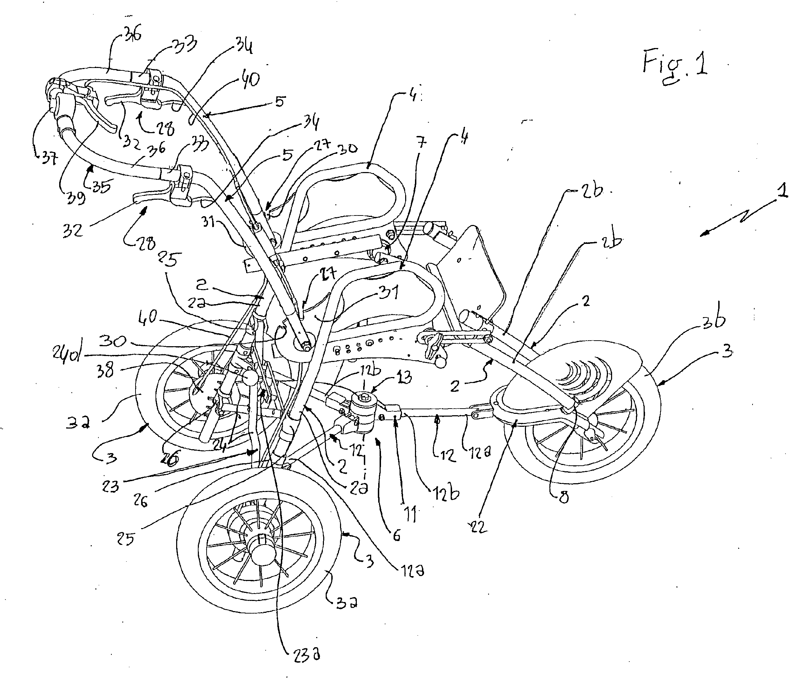

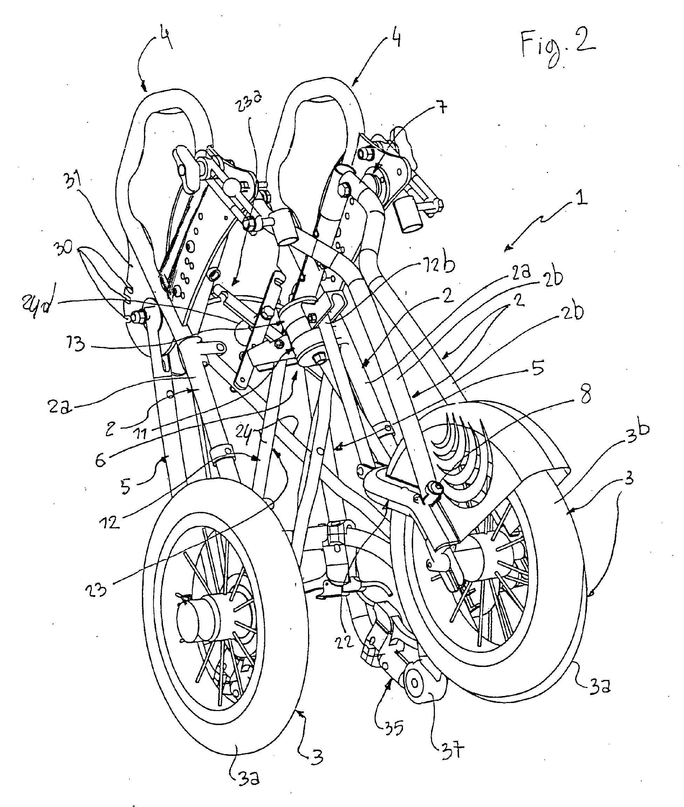

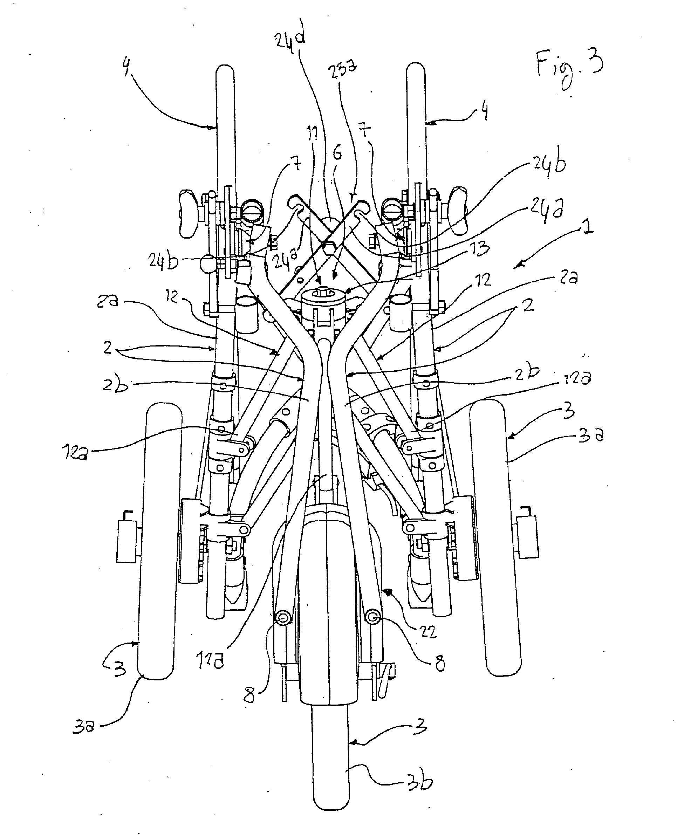

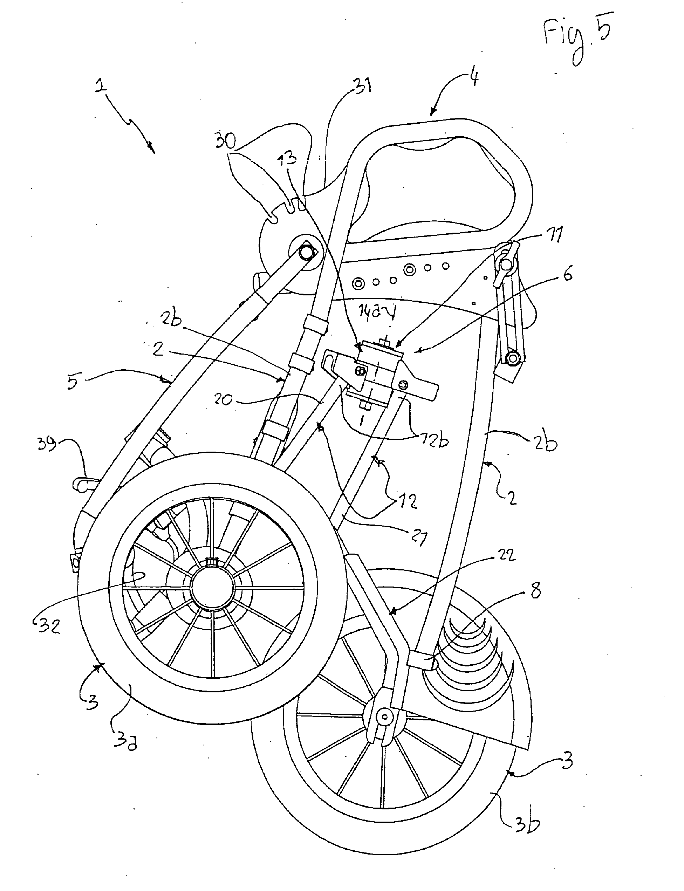

In an original manner, the supporting uprights 2 can be mutually moved between an operating position, at which they are spaced apart from each other (see Fig. 1) and a closed position, at which they are all close to each other (see Figs. 2, 3, 4 and 5).

In addition, articulated connecting means 6 is provided to be interposed between the uprights 2, which means is adapted to guide displacement of the uprights 2 themselves between the operating position and the closed position and to stabilise said uprights to both the above stated positions.

Advantageously, to facilitate the closing and opening movement, at least one of the uprights 2 is connected to one of the side support elements 4 through an articulated joint 7 that from a functional and structural point of view can be part of the articulated connecting means 6.

In the preferred embodiment illustrated in the accompanying drawings, frame 1 is preferably defined by a pair of rear uprights 2a, each terminally in engagement with a rear wheel 3a, and a pair of front uprights 2b in engagement with a single front wheel 3b to define a tricycle. Advantageously, the front wheel 3b is connected with the two front uprights 2b through respective hinges 8.

In addition, the rear uprights 2a are rigidly in engagement with the respective side support elements 4, this construction choice being advantageous because it allows both the rear uprights and the side arms of the seat to be manufactured from a suitably-folded single tube, and each of the two front uprights 2b is connected with one of the two side support elements 4 through a respective articulated joint 7.

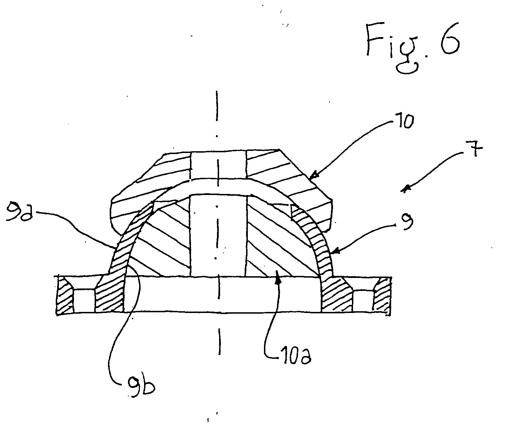

Advantageously, as shown in Fig. 6, the articulated joint 7 comprises a substantially hemispheric element 9 mounted on the side support element 4 and a substantially hemispheric cap 10 coupled with the substantially hemispheric element 9 and mounted on an upright 2. The cap 10 and hemispheric element 9 are free to slide with respect to each other at least partly.

In more detail, the hemispheric element 9 too has a cap-shaped configuration and associated with the concave outer surface 9a of it is cap 10, in turn rigidly connected with the upright 2; on the contrary, associated with the convex inner surface 9b of said element 9 is a half-ball 10a that is linked to cap 10 rigidly connected with the upright 2.

The articulated connecting means 6 comprises a kinematic operating mechanism 11 consisting of arms 12 articulated, at an outer end 12a thereof, on the respective uprights 2, and of a central attachment assembly 13 on which the arms 12 themselves are articulated at an inner end 12b.

The central attachment assembly 13 is such structured that it allows displacement of arms 12 between a widened position, corresponding to the operating position of the uprights 2, at which the arms 12 themselves diverge from said attachment assembly and lie in a plane substantially parallel to that of the seat and therefore in a horizontal plane in the normal running condition (Fig. 1) and an umbrellalike closed position corresponding to closure of the uprights 2 at which arms 12 are substantially aligned with, and disposed close to each other (Figs. 2-5).

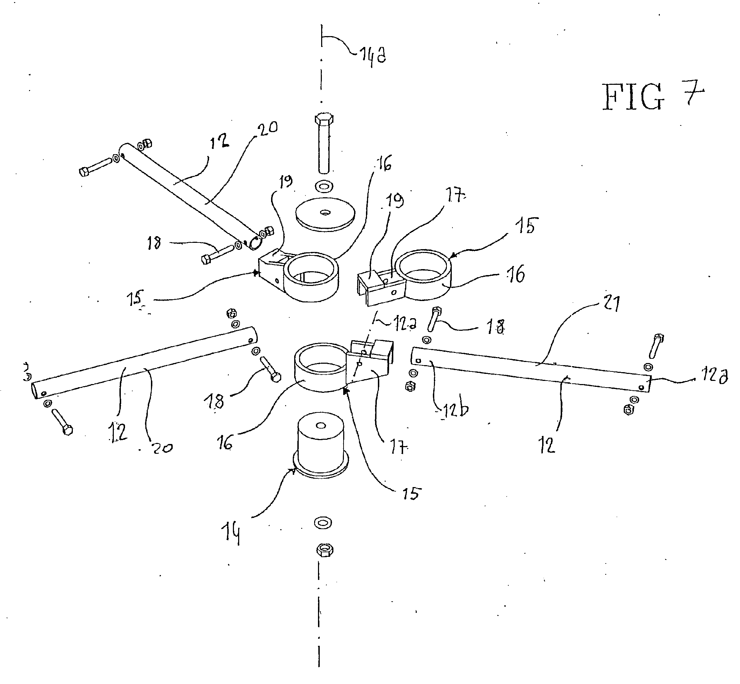

In addition, as clearly viewed from Fig. 7, the central attachment assembly 13 comprises a pivot pin 14 having a longitudinal axis 14a oriented at right angles to the seat plane and elements 15 for hinging of the inner ends 12b of arms 12. The hinging elements 15 are suitable for coupling with arms 12 in accordance with hinging axes 12a parallel to the seat plane and are rotatably in engagement with the pivot pin 14 around the longitudinal axis 14a of said pin.

More specifically, each hinging element 15 comprises a ring-shaped body 16 adapted to carry out the rotatable coupling with the pivot pin 14 around a longitudinal axis 14a of same and at least one attachment extension 17 integral with the ring-shaped body 16. Practically, each attachment extension 17 is formed of two parallel plates inside which the inner end 12b of a respective arm 12 can be housed so that said arm can be passed through by a hinge pin 18 defining a hinging axis 15a. The above mentioned parallel plates are connected at the upper part thereof by a third plate 19 defining an abutment portion adapted to lock rotation of the arm articulated on the attachment extension 17 to the widened position.

In the embodiment providing three-wheeled vehicles as shown in the accompanying drawings, the kinematic operating mechanism 11 comprises two rear arms 20, each for connection between the central attachment assembly 13 and a respective rear upright 2a, and a front arm 21 for connection between the central attachment assembly 13 and the front uprights 2b.

Three distinct hinging elements 15 each having a single attachment extension 17, rotatably and individually support one and only one respective arm 12 (Fig. 7).

In addition, a fork 22 for support of the front wheel 3b is engaged with the outer end 12a of the front arm 21 and carries hinges 8 for connection to the front uprights 2b.

Advantageously, the joints 7 and hinges 8 connecting the front uprights 2b to the side support elements 4 and the fork 22 respectively, enable the side support elements 4 themselves to be moved close to each other as much as possible and simultaneously the longitudinal bulkiness of frame 1 to be reduced, in cooperation with the kinematic operating mechanism 11.

Advantageously, the articulated connecting means 6 also comprises a stabilising crosslike structure 23 interposed between a pair of corresponding supporting uprights 2 disposed on opposite sides of frame 1. In the embodiment shown the crosslike structure 23 is interposed between the two rear uprights 2a.

The crosslike structure 23 in turn comprises two rods 24 centrally articulated on each other and having respective upper ends adapted to be hinged on movable sleeves 25 slidably in engagement on respective uprights 2. The lower ends of rods 24 are hinged on fixed attachment elements 26 fastened to the arms 2.

Conveniently, the rods 24 of the crosslike structure 23 can have curved end portions intended for hinging with the movable sleeves 25.

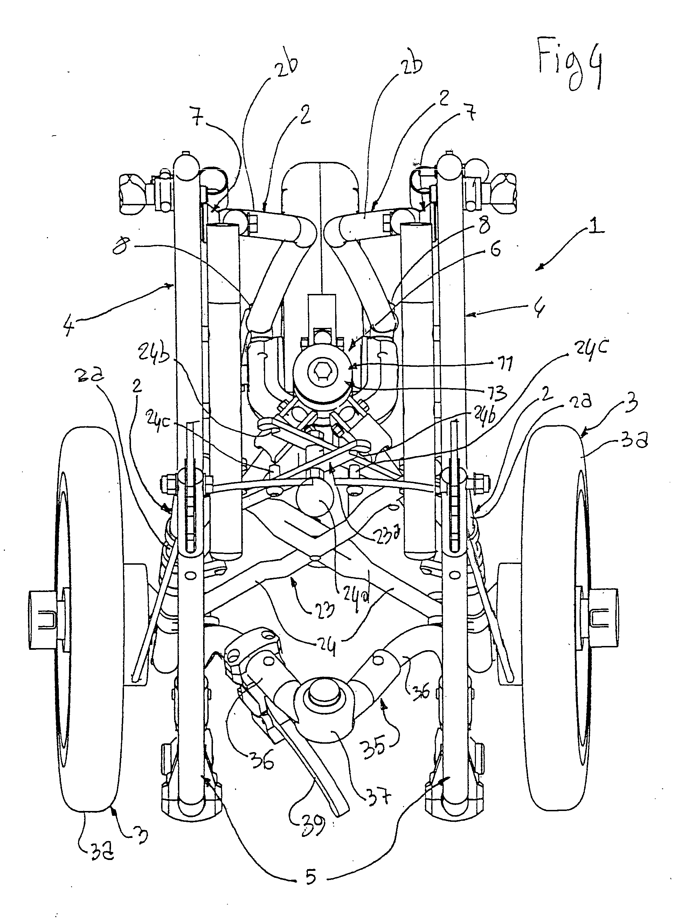

Mounted on the crosslike structure 23 is an auxiliary locking crosslike structure 23a (Figs. 2, 3 and 4) defined by a pair of auxiliary rods 24a mutually hinged at an intermediate point and having respective lower ends each hinged on a rod 24 of the stabilising crosslike structure 23. Each of the auxiliary rods 24a further has, at an upper end, a seat 24b adapted for engagement, in the open position of frame 1 (Fig. 1) , with a pin 24c carried by the other auxiliary rod 24a (Fig. 4), with the two auxiliary rods 24a parallel to each other. A lock member 24d, of known type and therefore not shown in detail, is used to keep the locking crosslike structure 23a and the stabilising crosslike structure 23 in place, in the open configuration of frame 1.

Each of the operating handles 5 is hinged on a respective side support element 4 and/or a respective supporting upright 2, and is movable between at least one command position and one folded position, corresponding to the closed position of uprights 2, in which the operating handles 5 themselves are disposed substantially aligned with and close to the uprights 2.

Frame 1 further comprises locking means 27 for the operating handles 5 and drive means 28 remotely active on the locking means 27, to move the operating handles 5 between the different positions.

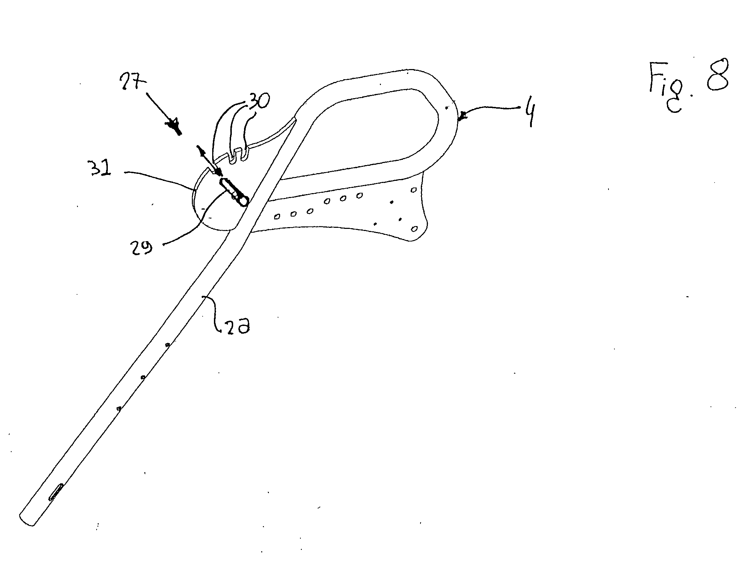

Preferably, as shown in Fig. 8, the locking means 27 for the operating handles 5 comprises stop pins 29 mounted on handles 5, for the sake of clarity not shown in Fig. 8 and adapted to be engaged in respective seats 30 formed in the side support elements 4 and/or on the uprights 2.

In the preferred embodiment herein illustrated, the two operating handles 5 are connected to two plates 31 in turn rigidly connected to the rear uprights 2a and the side support elements 4.

Each of plates 31 has at least two, preferably three, seats 30 to enable fastening of handles 5 to corresponding command positions by means of the stop pins 29 conforming in shape to seats 30. Upon pulling of the stop pins 29 out of the respective seats 30, the operating handles 5 can be moved between the command positions corresponding to different inclinations of the seat back, and to a folded position, corresponding to the closed position of the uprights, in which said handles 5 are disposed substantially aligned with and close to the latter.

Advantageously, the drive means 28 comprises at least one lever actuator 32 located on a grip end 33 of the operating handles 5 spaced apart from the locking means 27. The actuator 32 is operatively connected with the locking means 27, preferably through a control wire 34 acting on pin 29 against the action of a counter-spring, following a known and therefore not illustrated scheme to pull the pin 29 out of the respective seats 30.

Advantageously, frame 1 comprises a lever actuator 32 and a stop pin 29 for each operating handle 5.

In order to facilitate the pushchair or pram driver, frame 1 further has an articulated handlebar for connection between the two operating handles 5, which handlebar is able to allow closing of frame 1.

The articulated handlebar 35 comprises a pair of grip elements 36, each of them being rotatably engaged on an end 33 of one of handles 5, and a hinge 37 for mutual connection between the grip elements 36, to keep approaching of the two grip elements 36 when frame 1 is in the closed position.

Preferably, each of the grip elements 36 is defined by a curved rod to give the articulated handlebar 35 a U-shaped conformation, in the open configuration of frame 1.

In addition, the frame in accordance with the invention comprises a braking device 38 associated with the wheels 3, preferably with the pair of rear wheels 3a, and an actuating lever 39 operatively connected with the braking device 38, preferably through a cable 40, and mounted on the articulated handlebar 35.

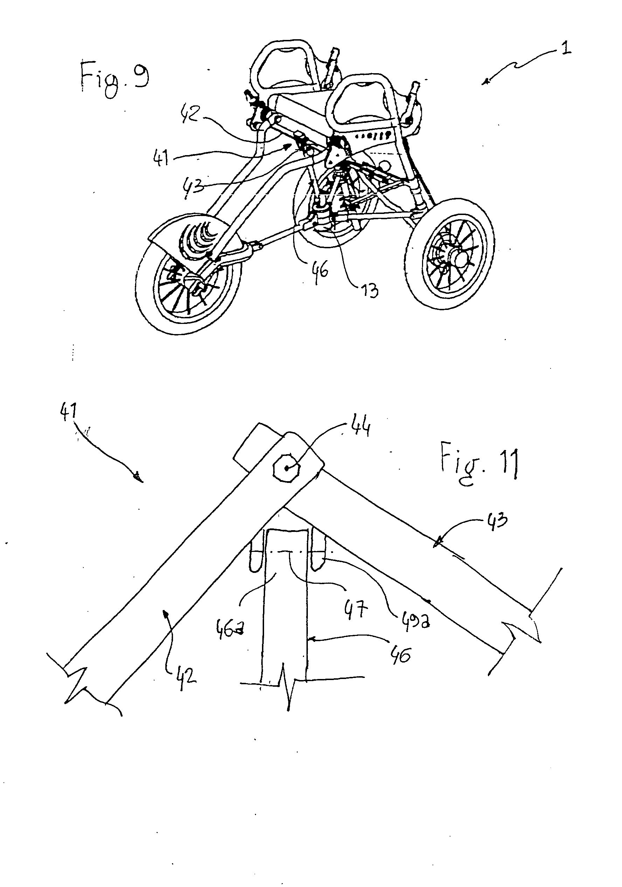

Fig. 9 shows an alternative embodiment of the concerned frame 1 that further comprises a stabilizer 41 for the kinematic operating mechanism 11. Stabilizer 41 ensures locking of frame 1 when it is in the open position.

Stabilizer 41 comprises a first 42 and a second 43 stabilizing flat bars that are each hinged on one of the front uprights 2b and mutually hinged around an articulation axis. In the operating position of frame 1, the stabilising flat bars 42, 43 are aligned with each other and locked by a ratchet 45. One of the flat bars 43 is further connected, through a tube 46, to the central attachment assembly 13. In particular, the ends 46a, 46b of tube 46 are hinged on the flat bar 43 and the central attachment assembly 13 respectively, around respective horizontal axes 47, 48, through U-shaped brackets 49a, 49b.

When the ratchet 45 is released, it allows closure of one flat bar upon the other 42, 43 and, since the flat bars 42, 43 are mounted on the uprights 2b in an inclined manner, tube 46 is pulled upwardly and it drags the central attachment assembly 13 along with it, causing closure of frame 1.

The invention achieves important advantages.

In fact, first of all, the articulation of the front uprights and the kinematic operating mechanism to which all uprights are linked allows the bulkiness of the folding frame in the closed position to be greatly reduced even in the longitudinal direction.

In addition, the two articulated joints for connection between the front uprights and the side support elements allow the support elements themselves to be approached the most in the closed position of the frame, thereby reducing the transverse bulkiness to a minimum.

It will be recognised that said kinematic operating mechanism not only guides the mutual displacements of the uprights when passage from the closed position to the operating open position or vice versa takes place, but it enables a good overall steadiness of the frame in the running condition of the vehicle to be achieved.

The presence of the crosslike structure between the rear uprights further increases the frame steadiness that has already reached a high degree due to the kinematic operating mechanism, so that the folding frame can offer performances that can be compared with those obtainable with frames that cannot be folded, i.e. fully rigid and therefore having a fixed and not reducible bulkiness.

Furthermore, the lever actuators controlling the stop pins allow the inclination of the operating handles and the back to be easily varied depending on requirements.

Finally, the actuating lever of the braking device placed on the handlebar guarantees a safer and more immediate control of the pram/pushchair.

## Claims

1. A wheeled folding frame, particularly for pushchairs, prams, wheelchairs and the like, comprising:
- supporting uprights (2) adapted to terminally engage at least three wheels (3);
- preferably side support elements (4) for a seat, connected with said uprights; and
- operating handles (5) connected at least with said side support elements (4) and/or said supporting uprights (2),
**characterised in that** said supporting uprights (2) are mutually shiftable between an operating position at which they are spaced apart from each other and a closed position at which all uprights are disposed substantially close to each other, and **in that** it comprises articulated connecting means (6) interposed between the uprights (2) and adapted to guide shifting of same between said operating and closed positions and to stabilise said uprights in both said positions.

2. A frame as claimed in claim 1, **characterised in that** the articulated connecting means comprises an articulated joint (7), at least one of said uprights (2) being connected with one of said side support elements (4) through said articulated joint (7).

3. A frame as claimed in claim 2, **characterised in that** said articulated joint (7) comprises a substantially hemispheric element (9) mounted on the side support element (4) and a substantially hemispheric cap (10) coupled with said substantially hemispheric element (9) and mounted on said upright (2); the cap (10) and the hemispheric element (9) being free to slide with respect to each other at least partly.

4. A frame as claimed in claims 1 to 3, **characterised in that** said articulated connecting elements (6) comprise at least one kinematic operating mechanism (11) formed of arms (12) hinged at one of the outer ends thereof (12a) on respective uprights (2), and of a central attachment assembly (13) on which the arms (12) themselves are hinged, at an inner end thereof (12b), said central attachment assembly (13) being adapted to enable shifting of the arms (12) between a widened position corresponding to said operating position of the uprights (2) at which said arms (12) diverge from said assembly and lie in a plane substantially parallel to the plane of the seat and an umbrellalike closed position corresponding to said closed position of the uprights (2) at which said arms (12) are substantially aligned and disposed close to each other.

5. A frame as claimed in claim 4, **characterised in that** said central attachment assembly (13) comprises:
- a pivot pin (14) having a longitudinal axis (14a) substantially oriented at right angles to the seat plane; and
- elements (15) for hinging the inner ends (12b) of said arms (12) on hinging axes (12a) substantially parallel to the seat plane, said hinging elements (15) being rotatably in engagement with said pivot pin (14) around the longitudinal axis (14a) of said pin.

6. A frame as claimed in claim 5, **characterised in that** each of said hinging elements (15) comprises:
- a ring-shaped body (16) adapted to carry out the rotatable coupling with said pivot pin (14) around the longitudinal axis (14a) of the latter; and
- at least one attachment extension (17) rigidly connected with said ring-shaped body (16) and adapted to form the hinging seat for a respective arm (12), said attachment extension (17) having an abutment portion (19) adapted to lock rotation of the arm (12) hinged thereon to said widened position.

7. A frame as claimed in claim 4, **characterised in that** the kinematic operating mechanism (11) comprises two rear arms (20), each for connection between the central attachment assembly (13) and a respective rear upright (2a), and a front arm (21) for connection between the central attachment assembly (13) and the front uprights (2b).

8. A frame as claimed in claim 1, **characterised in that** said articulated connecting means (6) further comprises at least one crosslike structure (23) interposed between a pair of corresponding supporting uprights (2) disposed on opposite sides of the frame (1) itself.

9. A frame as claimed in claim 8, **characterised in that** said crosslike structure (23) comprises two rods (24) centrally articulated on each other and a pair of movable sleeves (25) slidably in engagement on respective uprights (2) and adapted to define hinging attachments of corresponding ends of said rods (24).

10. A frame as claimed in claim 8, **characterised in that** the rods (24) of said crosslike structure (23) have curved end portions intended for hinging with said movable sleeves (25).

11. A frame as claimed in claim 8, **characterised in that** said at least one crosslike structure (23) is interposed between two rear uprights (2a).

12. A frame as claimed in claim 1, **characterised in that** said uprights (2) comprise fixed uprights rigidly engaged with the respective side support elements (4) of a seat, and movable uprights articulated on the last-mentioned elements.

13. A frame as claimed in claim 12, **characterised in that** said fixed uprights define the rear uprights of the frame (1) itself.

14. A frame as claimed in claim 1, **characterised in that** said operating handles (5) are shiftable between at least one command position and one folded position corresponding to the closed position of the uprights (2), wherein the operating handles themselves are disposed substantially aligned with, and close to said uprights.

15. A frame as claimed in anyone of the preceding claims, **characterised in that** the supporting uprights (2) comprise a pair of rear uprights (2a) and a pair of front uprights (2b), and **in that** each of said front uprights (2b) is connected with a respective one of the side support elements (4) through a respective articulated joint (7).

16. A frame as claimed in anyone of the preceding claims, **characterised in that** it comprises two rear wheels (3a), each engaged with a respective rear upright (2a) and one front wheel (3b) connected to the two front uprights (3b) through respective hinges (8).

17. A frame as claimed in anyone of the preceding claims, **characterised in that** the rear uprights (2a) are rigidly engaged with the respective side support elements (4).

18. A frame as claimed in anyone of the preceding claims, **characterised in that** it further comprises a fork (22) designed to bear the front wheel (3b), said fork (22) being engaged to the outer end (12a) of the front arm (21) and carrying the hinges (8) for connection with the front uprights (2b).

19. A frame as claimed in anyone of the preceding claims, **characterised in that** it further comprises a stabiliser (41) for the kinematic operating mechanism (11) having a first (42) and a second (43) stabilising flat bars, which flat bars are each hinged on one of the front uprights (2b) and mutually hinged around an articulation axis (44); one of said flat bars (43) being further connected, through a tube (46), with the central attachment assembly (13); the ends (46a, 46b) of the tube (46) being articulated on the flat bar (43) and the central attachment assembly (13) respectively, around respective horizontal axes (47, 48).

20. A frame as claimed in anyone of the preceding claims, **characterised in that** it further comprises:
- locking means (27) for the operating handles (5); and
- drive means (28) preferably remotely active on the locking means (27) to move said operating handles (5) between at least two distinct command positions and one folded position corresponding to the closed position of the uprights (2), wherein the operating handles themselves (5) are disposed substantially aligned with and close to said uprights (2).

21. A frame as claimed in claim 20, **characterised in that** each of the operating handles (5) is articulated on a respective side support element (4) and/or a respective supporting upright (2), and **in that** the locking means (27) of the operating handles (5) comprises stop pins (29) mounted on the handles (5) and adapted to be engaged in respective seats (30) formed in the side support elements (4) and/or the uprights (2).

22. A frame as claimed in claim 21, **characterised in that** it comprises at least two, and preferably at least three, seats (30) designed to be engaged by the stop pins (29) in the command positions of the operating handles (5).

23. A frame as claimed in claim 21, **characterised in that** the drive means (28) comprises at least one lever actuator (32) placed on a grip end (33) of the operating handles (5) at a spaced apart position from the locking means (27) and operatively connected with said locking means (27).

24. A frame as claimed in claim 20 and 23, **characterised in that** the lever actuator (32) is connected with the respective stop pin (29) through a control wire (34) acting on the pin (29) against the action of a counter-spring to draw said pin (29) out of the respective seats (30).

25. A frame as claimed in claim 23, **characterised in that** it comprises a lever actuator (32) and a stop pin (29) for each operating handle (5).

26. A frame as claimed in anyone of the preceding claims, **characterised in that** it further comprises an articulated handlebar (35) for connection between the two operating handles (5) capable of enabling closure of the frame (1).

27. A frame as claimed in claim 26, **characterised in that** the articulated handlebar (35) comprises a pair of grip elements (36), each of which is rotatably engaged on an end (33) of one of the handles (5), and a hinge (37) for mutual connection between the grip elements (33), to enable approaching of said two grip elements (33) in the closed position of the frame (1).

28. A frame as claimed in claim 26, **characterised in that** each of the grip elements (33) is defined by a curved rod.

29. A frame as claimed in claim 26, **characterised in that** it further comprises a braking device (38) associated with the wheels (3) and an actuating lever (39) operatively connected with the braking device (38) and mounted on the articulated handlebar (35).
